# EUROPÄISCHE PATENTSCHRIFT

(11) **EP 0 861 167 B1**
(45) Veröffentlichungstag und Bekanntmachung des Hinweises auf die Patenterteilung: **12.01.2000**
(21) Anmeldenummer: 96938127.6
(22) Anmeldetag: 07.11.1996
(51) Int. Cl.: B60Q 1/14, H01H 25/04

(54) **LENKSTOCKSCHALTER MIT PARALLEL ZUEINANDER VERSCHWENKBAREN KONTAKTEN**
STEERING COLUMN ASSEMBLY SWITCH WITH CONTACTS WHICH CAN PIVOT PARALLEL TO ONE ANOTHER
INTERRUPTEUR SUR COLONNE DE DIRECTION A CONTACTS PIVOTANT PARALLELEMENT LES UNS AUX AUTRES

(30) Priorität: 29.11.1995 DE 19544444
(43) Veröffentlichungstag der Anmeldung: 02.09.1998
(73) Patentinhaber: ITT Automotive Europe GmbH, 60488 Frankfurt am Main (DE)
(72) Erfinder: ENGELHARDT, Martin, D-74246 Eberstadt (DE); HECHT, Walter, D-74321 Bietigheim-Bissingen (DE); KLEIN, Rudolf, D-74348 Lauffen (DE)
(74) Vertreter: Dreiss, Fuhlendorf, Steimle & Becker
(86) Internationale Anmeldenummer: EP9604863
(87) Internationale Veröffentlichungsnummer: WO9719831

(56) Entgegenhaltungen:
- EP-A- 0 533 565
- GB-A- 1 257 941

## Beschreibung

Die Erfindung betrifft einen Kippschalter bzw. einen Lenkstockschalter gemäß dem Oberbegriff des Anspruchs 1. Schaltern ist es bekannt, über einen Kipphebel ein schwenkbares Schaltglied zu betätigen, welches in Abhängigkeit von seiner Schwenkstellung gehäusefeste Kontakte miteinander verbindet bzw. auftrennt. Die Mechanik derartiger Schalter ist relativ aufwendig und es müssen sehr genaue Toleranzen eingehalten werden, damit der Schalter ordnungsgemäß arbeitet. Im übrigen ist die Anzahl der betätigbaren Kontakte vergleichsweise gering und die Montage derartiger Schalter bietet gewisse Schwierigkeiten. Die GB-A-1257941 zeigt einen derartigen Schalter.

Die Erfindung geht daher aus von einem Kippschalter bzw. Lenkstockschalter der sich aus dem Oberbegriff des Anspruchs 1 ergebenden Gattung. Aufgabe der Erfindung ist es, einen neuartigen Schalter anzugeben, welcher einfach aufgebaut ist und eine große Anzahl von Kontakten mittels des Schalthebels zu schalten gestattet.

Die Aufgabe wird durch die sich aus dem Anspruch 1 ergebende Merkmalskombination gelöst.

Die Erfindung besteht im Prinzip also darin, einen Betätigungsteg vorzusehen, welcher um die Schaltachse der Lagerstellen schwenkbar ist. Dieser Betätigungssteg kann sowohl für die Aufnahme von von diesem abstehenden Betätigungsansätzen dienen, an denen sich eine geeignete Anzahl von beweglichen Kontakten anbringen lassen, als auch als Angriffshebel für den Schalthebel dienen, durch welchen die Betätigungsansätze verschwenkt werden. Ein derartiger Schalter kann einfacher zusammengebaut werden. Danach greift der Schalthebel mittels einer Gabel an dem Betätigungssteg an, die in Montagerichtung nur in den Betätigungssteg eingehangen werden muß. Die Anordnung der Erfindung hat weiterhin den Vorteil, daß man durch die Wahl der Abstände zwischen den einzelnen Achsen also zwischen der Schaltachse, der Längsachse des Betätigungssteges und der Schalthebelachse eine geeignete Winkelübersetzung hinsichtlich des Schwenkweges der Betätigungsansätze erreichen kann, soweit die beweglichen Kontakte an Betätigungsansätzen befestigt sind, wie weiter unten noch erläutert wird.

Eine räumlich sehr eng bauende Konstruktion läßt sich mit Hilfe der Maßnahmen nach Anspruch 3 erreichen. Danach erhält man einen vergleichsweise kurzer Ausdehnung für den hinter der Schalthebelachse liegenden Abschnitt des Schalthebels. Weiterhin ist durch den vorgeschlagenen Querschnitt sichergestellt, daß einerseits die Reibungskräfte zwischen der Gabel des Schalthebels und dem Betätigungssteg vergleichsweise gering sind, während der Durchmesser des Betätigungssteges relativ groß ist und so erhebliche Kräfte aufzunehmen vermag.Es ist auch ein runder Querschnitt möglich, wegen der geringeren Querschnittsfläche ergibt sich aber hier eine geringere Stabilität.

Durch die Merkmalskombination nach Anspruch 4 lassen sich eine große Anzahl von beweglichen Kontakten an dem Schaltglied befestigen. Hierzu ist es nur notwendig, eine hinreichend große Anzahl von Betätigungsansätzen an dem Schaltglied vorzusehen und diese wiederum mit einer entsprechenden Anzahl von beweglichen Kontakten zu versehen. Ein großer Vorteil der Erfindung liegt somit darin, daß längs des Betätigungsstegs eine Vielzahl von Betätigungsansätzen nockenförmig angebracht werden können, die dann mit entsprechenden gehäusefesten Kontakten zusammenwirken.

Um die Tolerierung der einzelnen Bauteile zu vereinfachen und gleichwohl eine sichere Kontaktgabe in Abhängigkeit von einer vorgegebenen Winkelstellung des Schalthebels zu erhalten, empfiehlt sich in Weiterbildung der Erfindung die Merkmalskombination nach Anspruch 5. Danach ist die Lage des beweglichen Kontaktes an dem jeweiligen Betätigungsansatz durch den jeweiligen Anschlag festgelegt. Der bewegliche Kontakt kann aber entgegen der Vorspannung der zugehörigen Feder in den Betätigungsansatz hineingeschoben werden, so daß hier ein Ausgleich von Toleranzen leicht erreicht und eine sichere Kontaktgabe gewährleistet werden kann. Durch unterschiedlich liegende Anschläge kann weiterhin auch eine bestimmte Schaltreihenfolge der beweglichen Kontakte bei der Verschwenkung des Schalthebels erzielt werden. Darüber hinaus kann durch den relativ lang gewählten Federweg für alle Kontakte die gleiche Vorspannfeder verwendet werden.

In dem nachfolgenden Ausführungsbeispiel sind die gehäusefesten Kontakte am Boden des Gehäuses angeordnet. Es ist aber auch vorteilhaft, diese Kontakte an der zur Schwenkebene des jeweiligen Betätigungsansatzes parallelen Gehäusewand anzuordnen und die beweglichen Kontakte entsprechend parallel zur Schaltachse und zu der genannten Gehäusewand senkrechtstehend auszurichten. Hierdurch kann die Anzahl der schaltbaren Kontakte vergrößert werden. Diese Anordnung empfiehlt sich besonders für Schiebekontakte.

Die gehäusefesten Kontakte lassen sich aber auch sehr einfach entsprechend dem Vorschlag nach Anspruch 7 aufbauen, indem Drahtabschnitte als Kontakte wirken, welche mit dem Gehäuse vergossen und so an diesem befestigt sind.

Ein Ausführungsbeispiel der Erfindung wird nachfolgend anhand der Zeichnung erläutert. Darin zeigt
- Fig. 1: einen Ausschnitt aus einer geschnittenen Seitenansicht des Schalters
- Fig. 2: einen Ausschnitt auf eine Draufsicht des geöffneten Schalters
- Fig. 3: einen weiteren Ausschnitt aus einer geschnittenen Seitenansicht des Schalters in verkleinerter Darstellung und
- Fig. 4: eine Vorderansicht eines Einzelteils nach Fig. 3 in geschnittener Form.

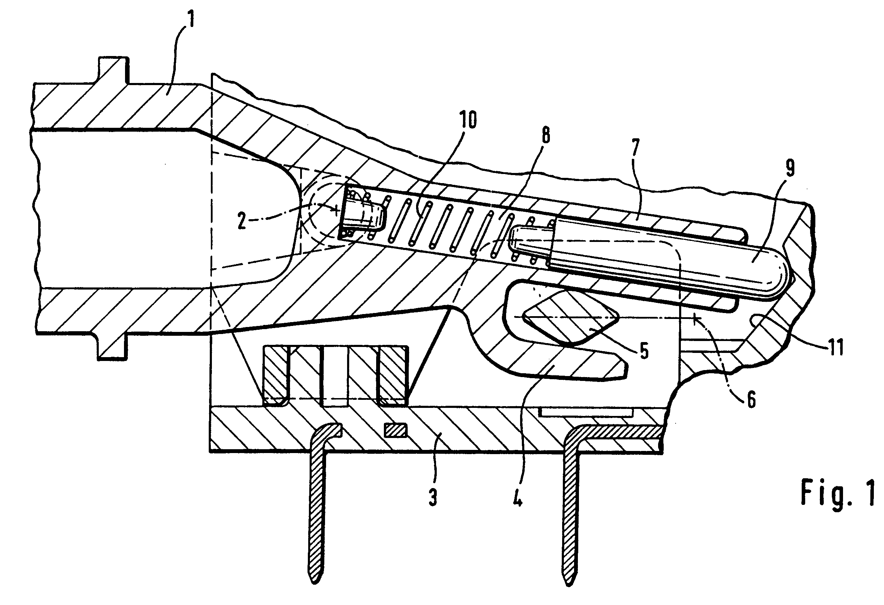

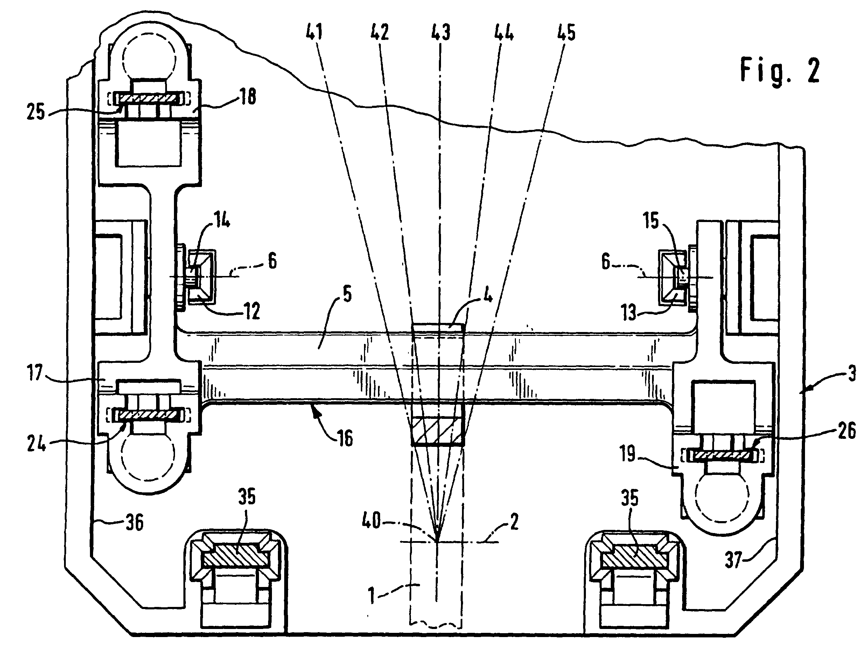

Fig. 1 zeigt den Schalthebel 1, der um die Schalthebelachse 2 im Schaltergehäuse 3 schwenkbar ist. Der Schalthebel 1 umgreift mit seiner Gabel 4 den Betätigungssteg 5, welcher um eine Schaltachse 6 im Gehäuse 3 schwenkbar angeordnet ist. Wie aus Fig. 2 zu erkennen, erstreckt sich der Betätigungssteg über fast die gesamte Breite des Gehäuses 3.

Am Schalthebelende 7 ist eine Öffnung 8 zur Aufnahme eines Rastbolzens 9 vorgesehen, welcher durch eine Rastfeder 10 vorgespannt ist. Der Rastbolzen 9 greift in eine Rastkontur ii im Gehäuse 3 ein, wodurch den Schwenkstellungen des Schalthebels definierte Rastetellungen zuordenbar sind.

Wie aus Fig. 1 und 2 ersichtlich, bedingt eine Schwenkbeweging des Schalthebels 1 eine entsprechende Schwenkbewegung des Betätigungssteges 5 um die Schaltachse 6, da der Betätigungssteg 5 in den gehäusefesten Lagerböcken 12,13 über Lagerbolzen 14,15 gelagert ist. In Fig. 2 ist der Verlauf des Schwenkhebels 1 sowie die Lage der Schalthebelachse 2 durch Strichlinien angedeutet. Der Schalthebel hat zwei senkrecht zueinander stehende Betätigungsachsen. In Fig. 2 ist eine zweite Drehachse 40 dargestellt. Diese steht senkrecht zur Blattebene, also auch senkrecht zur angegebenen Achse 2. Die Achse 2 gehört zur Schwenkebene in Fig. 1. Diese Schaltstellungen des Schalthebels 1 um die Schwenkachse 40 sind durch die Strichlinien 41 bis 45 angedeutet. Dabei bedeuten die Strichlinien 41 bis 45 folgendes: 41...Lage Hebel bei Blinker links gerastet, 42...Lage Hebel bei Autobahnblinken links (selbstrückstellend), 43...O-Stellung, 44...rechts..., 45...rechts... Es gilt also folgendes: Die zur Achse 2 senkrecht stehende Achse ist die für die Blinkerbewegung notwendige Achse. Die Achse 2 ist die für die hier beschriebene Lichtumschalt- und Lichthupenfunktion notwendige Achse. Da jedoch die Lichtfunktion auch in den Blinkstellungen betätigt werden können müssen, sind in Fig. 2 die Autobahnblink- und Blinken eingerastet-Stellungen strichpunktiert eingezeichnet. Die Ausbildung des Mechanismus mit Gabel 4 und Steg 5 erlaubt die Bewegungen um Drehachse 2 bei gleichzeitigen Bewegungen des Hebels um die zur Achse 2 senkrechten Achse.

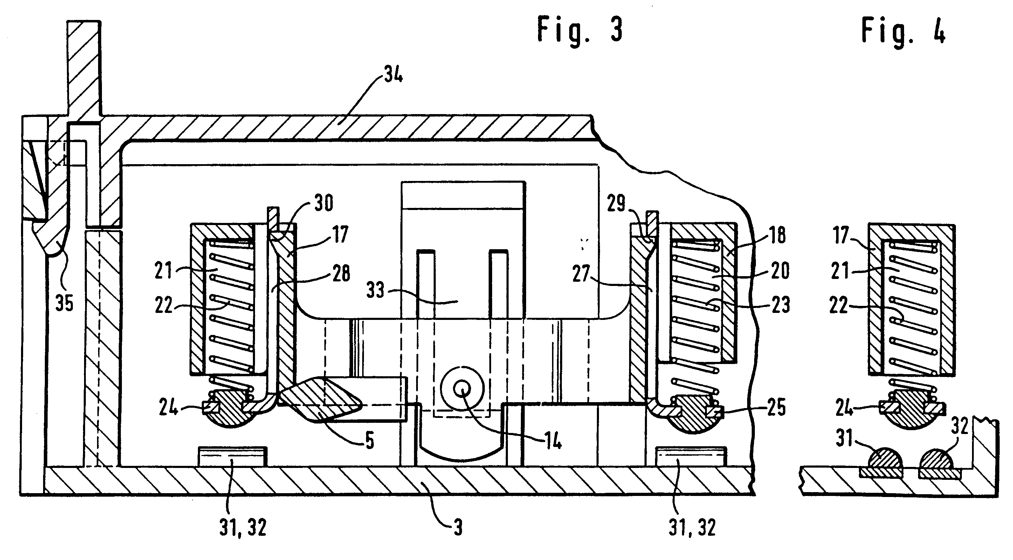

Im Bereich der Lagerstellen 12,14 bzw. 13,15 des Schaltgliedes 16 gehen von diesem Betätigungsansätze 17,18,19 ab, die hinreichend weit von der Schaltachse 6 abstehen und somit bei einer Schwenkbewegung des Betätigungssteges 5 eine entsprechende Schwenkbewegung durchführen. Fig. 3 zeigt einen zu Fig. 1 parallelen und zu diesem Schnitt versetzten Schnitt durch einen Teil des Schalters. Dabei ist zu erkennen, daß die Schaltansätze 17,18 Ausnehmungen 20,21 zur Aufnahme von Vorspannfedern 22,23 aufweisen. Die Vorspannfedern stützen sich am Boden der Ausnehmungen 20,21 ab und wirken gegenüber beweglichen Kontakten 24,25 in Sinne einer Vorspannung. Die beweglichen Kontakte 24,25 sind mit Schlitzen 27,28 versehen, in die Vorsprünge 29,30 ragen, die gegenüber den Schlitzen als Anschläge für die Bewegung der beweglichen Kontakte 24,25 wirken. Dementsprechend ist die Ausgestaltung des aus Fig. 2 ersichtlichen beweglichen Kontaktes 26 am Schaltansatz 19. Bei einer Kippbewegung der Schaltansätze 17,18 werden die entsprechenden gehäusefesten Kontakte 31,32 (siehe Fig. 4) elektrisch kontaktiert und damit durchgeschaltet.

Um die Lagerbolzen 14,15 in entsprechenden Lageröffnungen der Lagerböcke 12,13 zu halten, sind gehäusefeste federnde Lappen 33 vorgesehen, die auf das Schaltglied in Richtung eines Eingriffs der Lagerbolzen in die Lageröffnungen wirken. Hierdurch ist es möglich, die Lagerbolzen in die Öffnungen einzurasten.

In Fig. 3 ist weiterhin angedeutet, daß der Gehäusedeckel 34 auf das Gehäuse 3 aufrastbar ist. Dies geschieht mit Hilfe der Rasthaken 35.

Eine besonders vorteilhafte Ausgestaltung der Erfindung kann darin bestehen, die gehäusefesten Kontakte 31,32 nicht am Boden des Gehäuses 3 sondern an den Seitenwänden 36,37 anzubringen und die beweglichen Kontakte 24 bis 26 dementsprechend auszurichten. Da die beweglichen Kontakte in diesem Falle nicht zu den gehäusefesten Kontakten hin abgesenkt sondern in der Ebene der ortsfesten Kontakte verschwenkt werden (= Schiebekontaktprinzip), dürfen sich die gehäusefesten Kontakte nur unwesentlich über die Oberfläche der Seitenwände erheben, was durch eine entsprechende flächige Ausgestaltung erreicht werden kann beispielsweise indem in die Wand Kontakte ähnlich wie bei einer Leiterplatte herausgearbeitet werden. Eine flächige Ausgestaltung ist auch durch die übliche Technik - Umspritzung einer CU-Platine mit Kunststoffleicht möglich.

Ein weiterer wesentlicher Vorteil der Erfindung besteht darin, daß zusätzlich zu den Schaltansätzen 17,18,19 noch weitere Schaltansätze an dem Betätigungssteg 5 befestigt werden können, denen dann allerdings entsprechende gehäusefeste Schaltflächen zugeordnet werden müssen. Hierdurch kann aber eine sehr große Anzahl von Kontakten mit Hilfe einer einzigen Schwenkbewegung des Schalthebels bedient werden.

## Patentansprüche

1. Kippschalter bzw. Lenkstockschalter, bei dem der um mindestens zwei Schalthebelachsen (2,40) im Schaltergehäuse (3) schwenkbar gelagerte Schalthebel (1) an einem Schaltglied (16) angreift, welches um eine zu einer der Schalthebelachsen (2) parallel versetzte Schaltachse (6) drehbar ist, wobei an das Schaltglied (16) mindestens ein beweglicher Kontakt (24,25,26) angreift, der durch seine Bewegung einen Kontakt zu mindestens zwei gehäusefesten Kontakten (31,32) schafft bzw. diese Kontakt auftrennt und wobei das Schaltglied (16) an zwei einander im Abstand gegenüberliegenden Lagerstellen (12,14,13,15) drehbar gelagert ist und einen Betätigungssteg (5) aufweist, der im wesentlichen parallel versetzt zur Schaltachse (6) verläuft und die Lagerstellen (12,14,13,15) miteinander verbindet, **dadurch gekennzeichnet**, daß der Schalthebel über eine Gabel (4) an dem Betätigungssteg (5) angreift und diesen um die Schaltachse (6) verschwenkt.

2. Schalter nach Anspruch 1, **dadurch gekennzeichnet**, daß der bewegliche Kontakt (24,25,26) an dem Schaltglied befestigt ist.

## Claims

1. A toggle switch or steering column switch, in which the switch lever (1) supported such that it can be pivoted about at least two switch lever axes (2, 40) in the switch housing (3) engages a switch member (16), which is rotatable about a switch axis (6) offset parallel to one of the switch lever axes (2), and at least one movable contact (24, 25, 26) engages the switch member (16) and by its motion makes or breaks a contact with at least two contacts (31, 32) structurally connected to the housing, and the switch member (16) is supported rotatably on two spaced-apart, opposed bearing points (12, 14, 13, 15) and has an actuating strut (5) that extends in a manner substantially offset parallel to the switch axis (6) and connects the bearing points (12, 14, 13, 15) to one another, characterized in that the switch lever engages the actuating strut (5) via a fork and pivots the strut about the switch axis (6).

2. The switch of claim 1, characterized in that the movable contact (24, 25, 26) is secured to the switch member.

## Revendications

1. Interrupteur basculant, respectivement commutateur fixé à une colonne de direction, dans lequel le levier de commande (1), en appui pivotant autour d'au moins deux axes de levier de commande (2, 40) dans le boîtier de commutation (3), est en prise avec un élément commutateur (16), lui-même rotatif autour d'un axe de commutateur (6) parallèle à l'un des axes de levier de commande (2) et décalé par rapport à celui-ci, au moins un contact mobile (24, 25, 26) est en prise avec l'élément commutateur (16) et crée ou coupe par son déplacement un contact avec au moins deux contacts (31, 32) fixés au boîtier, l'élément commutateur (16) est en appui rotatif en deux points d'appui (12, 14, 13, 15) espacés et se faisant face, l'élément commutateur (16) présente une barrette d'actionnement (5), disposée substantiellement parallèlement à l'axe de commutateur (6), décalée par rapport à celui-ci et reliant les points d'appui (12, 14, 13, 15) entre eux, **caractérisé en ce que** le levier de commande est en prise avec la barrette l'actionnement (5) au moyen d'une fourche (4) et la fait pivoter autour de l'axe de commutateur (6).

2. Commutateur selon la revendication 1, caractérisé en ce que le contact mobile (24, 25, 26) est fixé à l'élément commutateur.
